(19) Europäisches Patentamt
European Patent Office
Office européen des brevets

(11) EP 3 678 061 A1

(12) EUROPEAN PATENT APPLICATION

(43) Date of publication:
08.07.2020 Bulletin 2020/28

(51) Int Cl.:
G06N 3/04 (2006.01)          G06N 3/08 (2006.01)

(21) Application number: 19150416.6

(22) Date of filing: 04.01.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Nokia Technologies Oy
02610 Espoo (FI)

(72) Inventor: Milioris, Dimitrios
75013 Paris (FR)

(74) Representative: Nokia EPO representatives
Nokia Technologies Oy
Karakaari 7
02610 Espoo (FI)

(54) **METHODS, APPARATUS AND COMPUTER-READABLE MEDIUM TO REALIZE LOCALIZATION**

(57) Method, computer-readable medium and apparatus to realize localization. This method comprising a step of determining first probabilities, associated with a set of possible positions, of having a current observation given one of the possible positions and a step of determining multiplications of the probability associated to one of the possible positions and a belief estimation associated this one of the possible positions and a step of determining second probabilities, associated to a set of possible actions and the set of possible positions, of having one of the possible actions given the multiplication associated to one of the possible positions and a step of determining an estimation of an action and a step of determining the position and a step of updating the belief estimation using the determined position and a transition function, the belief estimation being associated to all the possible future position.

Fig. 1

101 — Determination of first probabilities, associated of having a current observation given a possible position

102 — Multiplication of probability and belief estimation

103 — Determination of second probabilities of having one of the possible actions given the belief estimations associated to one of the possible positions

104 — Determination of an estimation of an action taken by the user

105 — Determination of the position of the user

106 — Updating the belief estimation

EP 3 678 061 A1

**Description**

FIELD OF INVENTION

The present subject matter relates to method and apparatus to realize localization. More precisely this method relies on deep learing and could be use for indoor or outdoor localization.

BACKGROUND

It is known that humans heavily rely on visual cues to position themselves and find their way in space. Indeed, visual diversity has for long been considered essential in building the character of a place, helping people to locate themselves in a physical space, and even improving the correlation of restorative experiences of spaces. Thus, knowing to identify and correlate spatial visual cues is a critical asset of way finding.

To realize localization, it is known to use Global Positioning Systems (GPS). This system allows the user to find our way in outdoor environments. However, GPS technologies do not allow accurate localization in some situations for example within indoor environments for several reasons, including non-line-of-sight conditions and relatively smaller-scale spaces requiring spatial decisions to be taken with higher accuracy.

Some embodiments of the present subject matter could be implemented using convolutional neural networks. Convolutional neural networks comprised a set of layers of different types.

One type of layer of a convolutional neural network, is a fully connected layer who is a layer having connections to all activations in the previous layer, as seen in regular neural networks. Their activations can hence be computed with a matrix multiplication followed by a bias offset.

One type of layer of a convolutional neural network, is a convolutional layer. In a convolutional neural network, the parameters of the convolutional layer consist of a set of learnable filters (or kernels), which have a small receptive field, but extend through the full depth of the input volume. During the forward pass, each filter is convolved across the width and height of the input volume, computing the dot product between the entries of the filter and the input and producing a 2-dimensional activation map of that filter. As a result, the network learns filters that activate when it detects some specific type of feature at some spatial position in the input.

SUMMARY

This summary is provided to introduce concepts related to method and apparatus to realize localization.

In one implementation, a method to realize localization is described. This method comprising a step of determining first probabilities, associated with a set of possible positions, of having a current observation given one of the possible positions and a step of determining multiplications of the probability associated to one of the possible positions and a belief estimation associated this one of the possible positions and a step of determining second probabilities, associated to a set of possible actions and the set of possible positions, of having one of the possible actions given the multiplication associated to one of the possible positions and a step of determining an estimation of an action and a step of determining the position and a step of updating the belief estimation using the determined position and a transition function, the belief estimation being associated to all the possible future position.

In another implementation, apparatus to realize localization is described. This apparatus comprising means for determining first probabilities, associated with a set of possible positions, of having a current observation given one of the possible positions and means for determining multiplications of the probability associated to one of the possible positions and a belief estimation associated this one of the possible positions and means for determining second probabilities, associated to a set of possible actions and the set of possible positions, of having one of the possible actions given the multiplication associated to one of the possible positions and a means for determining an estimation of an action and means for determining the position and a means for updating the belief estimation using the determined position and a transition function, the belief estimation being associated to all the possible future position.

In another implementation, computer-readable medium is described. This computer-readable medium has embodied thereon a computer program configured to realize a method to realize localization. This method comprises a step of determining first probabilities, associated with a set of possible positions, of having a current observation given one of the possible positions and a step of determining multiplications of the probability associated to one of the possible positions and a belief estimation associated this one of the possible positions and a step of determining second probabilities, associated to a set of possible actions and the set of possible positions, of having one of the possible actions given the multiplication associated to one of the possible positions and a step of determining an estimation of an action and a step of determining the position and a step of updating the belief estimation using the determined position and a transition function, the belief estimation being associated to all the possible future position.

BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of systems and/or methods in accordance with embodiments of the present subject matter are now described, by way of example only, and with reference to the accompanying figures, in which:

Figure 1 presents one embodiment of a method to realize localization.

Figure 2 presents an embodiment of the step of determining first probabilities.

Figure 3 presents an embodiment of the step of determining second probabilities.

Figure 4 presents an apparatus to realize localization.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

The method and apparatus described in the present subject matter can for example be used in the robotics area or for determination of the position of an apparatus that could be handled by an end user. The method and apparatus described in the present subject matter can be used for indoor or outdoor localization.

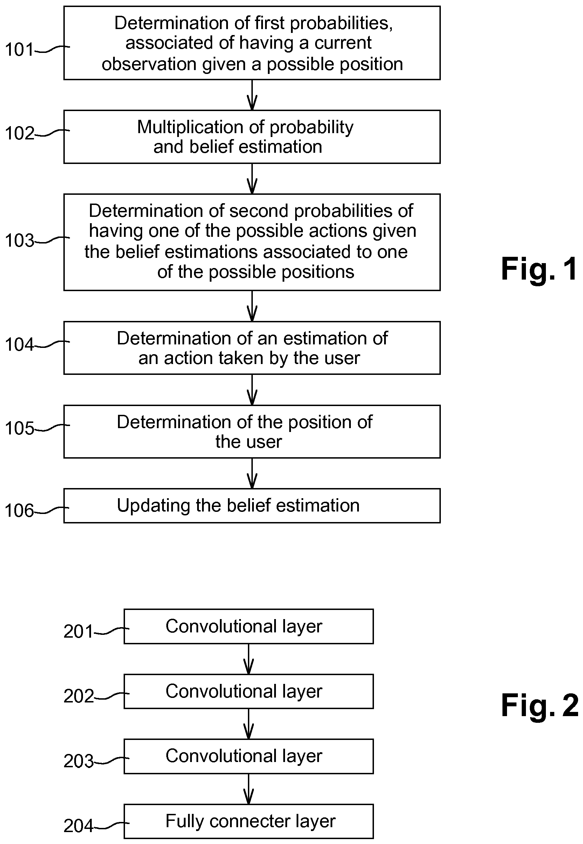

In one embodiment illustrated figure 1, a method to realize localization is proposed, this method comprises

- a step 101 of determining first probabilities, associated with a set of possible positions, of having a current observation given one of the possible positions
- a step 102 of determining multiplications of the probability associated to one of the possible positions and a belief estimation associated this one of the possible positions
- a step 103 of determining second probabilities, associated to a set of possible actions and the set of possible positions, of having one of the possible actions given the multiplication associated to one of the possible positions,

- a step 104 of determining an estimation of an action
- a step 105 of determining a position
- a step 106 of updating the belief estimation using the determined position and a transition function, the belief estimation being associated to all the possible future position.

Within this divulgation:

- The possible positions are noted $y_t$
- The current observation is noted $o_t$
- The first probabilities of having a current observation given one of the possible positions is noted $P(o_t|y_t)$
- The belief estimation is noted $B^*(y_t)$
- The multiplication is noted $B(y_t)$
- The possible actions are noted $a_t$
- The second probabilities of having one of the possible actions $a_t$ given the multiplication $B(y_t)$ associated to one of the possible positions is noted $\pi(a_t|B(y_t))$
- The estimation of the action taken is noted $\alpha t$
- The updated version of the belief estimation is noted $B^*(y_{t+1})$
- The transition function is noted $T_f$

In an embodiment the method is iterative.

In an embodiment the positions (or future positions) are the positions of the apparatus implementing the method of the present subject matter and the action are the action (going left, right, backward, forward) taken by apparatus alone or via the displacement of an end-user handling this apparatus.

In an embodiment of the present subject matter the position is defined by the coordinates of the localization of the apparatus implementing this method and the orientation of the apparatus implementing this method.

In an embodiment, the step 101 of determining first probabilities is configured to use as input the current observation $o_t$ and gives as an output a tensor likelihood noted $L(o_t) = P(o_t|y_t)$, also known as the the first probabilities.

Figure 2 presents an embodiment of the step 101 of determining the first probabilities is configured to use a fist convolutional neural network comprising at least:

- 3 convolutional layers 201, 202 and 203
- A fully connecter layer 204

and wherein an input of this first convolutional neural network being the current observation and an output of this neural network being the first probabilities.

On an embodiment the first convolutional neural network is trained using Adaptive Gradient Algorithm that maintains a per-parameter learning rate that improves performance on problems with sparse gradients, such as computer vision problems.

On an embodiment the first convolutional neural network is trained using Root Mean Square Propagation that captures the quick change of gradients (average of recent magnitudes), and works well for non-stationary problems, such as noisy data.

On an embodiment the first convolutional neural network is trained using Adam Optimizer: K. Diederik and J. Ba, "Adam: A method for stochastic optimization", in 3rd International Conference for Learning Representations, San Diego, 2015. This Adam Optimizer which is an advanced form of Gradient Descent. Gradient Descent maintains a single learning rate for all weight updates which does not change during training. The Adam Optimizer computes individual adaptive learning rates for each network weight from estimates of first and second moments of the gradients. It basically combines the advantages of (a) the Adaptive Gradient Algorithm, and (b) the Root Mean Square Propagation.

In another embodiment the first convolutional neural network is trained using a simple Gradient algorithm.

In an embodiment of the step 102 of determining multiplications the first probabilities obtain on the previous step are multiplied, using an Hadamard product, with a belief estimation:

$$B(y_t) = B^*(y_t) \odot P(o_t|y_t)$$

In an embodiment of the step 103 of determining second probabilities use as input the multiplication $B(y_t)$ and output the second probabilities $\pi(a_t|B(y_t))$. These second probabilities will be used to define the next action (left, right, backward, forward) and will consider obstacles of the map provided to this method.

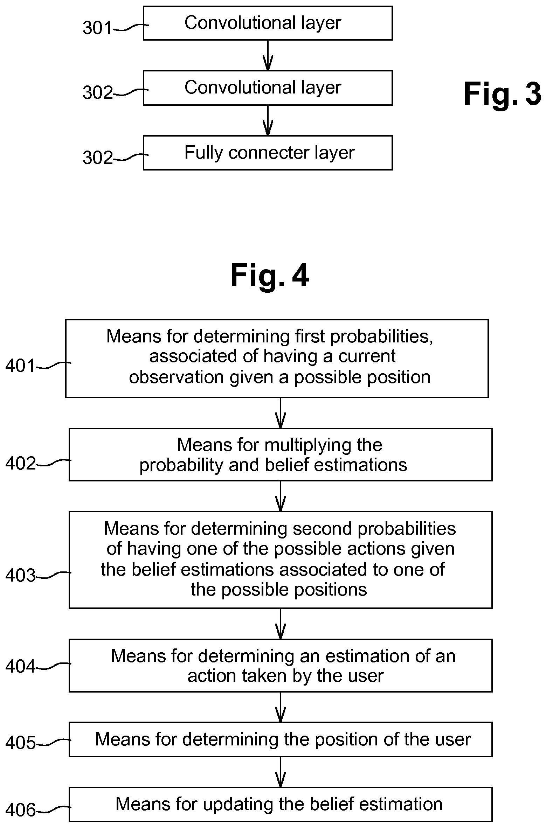

Figure 3 presents an embodiment of the step 103 of determining second probabilities is configured to use a second convolutional neural network comprising at least:

- 2 convolutional layers 301 and 302
- A fully connecter layer 303

and wherein:

- an input of the second convolutional neural network being the multiplications and
- an output of the second convolutional neural network being the second probabilities and
- an input of the second convolutional neural network being a map of an area on which the localization is realized and
- an input of the fully connected layer of the second convolutional neural network being a set of previous actions and an indication of the current time.

On an embodiment the second convolutional neural network is trained using Root Mean Square Propagation that captures the quick change of gradients (average of recent magnitudes), and works well for non-stationary problems, such as noisy data.

On an embodiment the second convolutional neural network is trained using Adam Optimizer: K. Diederik and J. Ba, "Adam: A method for stochastic optimization", in 3rd International Conference for Learning Representations, San Diego, 2015. This Adam Optimizer which is an advanced form of Gradient Descent. Gradient Descent maintains a single learning rate for all weight updates which does not change during training. The Adam Optimizer computes individual adaptive learning rates for each network weight from estimates of first and second moments of the gradients. It basically combines the advantages of (a) the Adaptive Gradient Algorithm, and (b) the Root Mean Square Propagation.

In another embodiment the second convolutional neural network is trained using a simple Gradient algorithm.

In an embodiment of the step 103 of determining second probabilities, the set of previous actions comprises between 4 and 6 previous actions with an optimal number of previous actions of 5.

In an embodiment, the exact number of previous actions to be taken into account will be determined according to the complexity of the environment in which the localization is done and after testing of different numbers of previous actions.

In an embodiment the step 104 of determining an estimation of the action is configured to use:

$$\alpha_t = \operatorname*{argmax}_{a_t} \pi(a_t|B(y_t))$$

Wherein:

- $a_t$ is the set of possible actions and
- $\alpha_t$ is the estimation of the action and
- $\pi(a_t|B(y_t))$ is the set of second probabilities.

In an embodiment the step 105 of determining the position is configured to use a map of an area on which the localization is realized and the estimated action.

For example, this map could comprise physical coordinates of blocks and the estimation of the system.

Within an embodiment the step 106 of updating the belief estimation using a transition function is configured to take at each time step and it's a classic function for kinetic designs and evaluations.

In another embodiment of the step 106 of updating the belief estimation, the belief estimation is updated at each location based on the estimated action $\alpha_t$ and based on the transition function.

The article of S. Gupta, J. Davidson, S. Levine, R. Sukthankar, and J. Malik, "Cognitive mapping and planning for visual navigation") especially section 5 present such use of a transition function to update belief estimation.

In another embodiment the method to realize localization also comprises further step of comparing the determined position with the position having the biggest associated belief estimation.

The method could also comprise a step of updating a training of the second convolutional neural network using the results of the comparisons.

This further comparison steps could be realized after the step 105 of determining the position.

In other words, at time $t$ a correct prediction (if the position obtained as $y_t^* = \underset{y_t}{\operatorname{argmax}} B(y_t)$ is the same than the determined position) gives 1 as a reward and then the rewards are used to update the training of the second convolutional neural network.

In an embodiment of the present subject matter:

- The current observation noted $o_t$ is a tensor of size the number of pixels in the width of the image by the number of pixels in the height of the image by 3 (red, green, blue value associated to a given pixel).
- The first probabilities noted $P(o_t|y_t)$ is a vector of size the number of possible positions.
- The belief estimation noted $B^*(y_t)$ is a vector of size the number of possible positions.
- The multiplication noted $B(y_t)$ is a vector of size the number of possible positions.
- The possible actions noted $a_t$ is a vector of size the number of possible actions.
- The second probabilities noted $\pi(a_t|B(y_t))$ is a matrix of size the number of possible positions by the number of possible actions.
- The estimation of the action is noted $\alpha t$ is a scalar.
- The updated version of the belief estimation noted $B^*(y_{t+1})$ is a vector of size the number of possible positions.

In an embodiment the belief estimation, noted $B^*(y_t)$, is represented using grid-based representation. More specifically this belief estimation can be presented as 3-dimension tensor (orientation, $x$ axis, $y$ axis), where the $(k; x; y)$ element gives $B^*(y_t)$, of being on the right state. The same occurs for the first probabilities, noted $P(o_t|y_t)$, of having a current observation given one of the possible positions.

In an embodiment of the present subject matter the first convolutional neural network comprises five layers; the first three are convolution layers, followed by a flatten layer, which reshapes the tensors. Then, a fully connected layer follows to learn the non-linear relations and extract the features. This first convolutional neural network also uses 2x2 pooling with strides set to 1 in all dimensions. Biases are added to the results of the convolution layers, with a bias-value added to each filter-channel. Furthermore, and in an optional manner, a Rectified Linear Unit (ReLU) can also be used to add some non-linearity to the formula and gives us insights to learn more complicated functions. In an embodiment an approximation to the rectifier is the analytic function $f(x) = log(1 + exp\ x)$, where $x$ is the input to a neuron, and $f(x)$ is the logistic function.

In some embodiments and for improving efficiency the ReLU operations is performed after max-pooling. In some embodiments the first convolution layer gets as input an image and down sample that image by using 2x2 max-pooling. The same process follows for the second and third convolution layer. Then the output of the third convolution layer is fed to the fully connected network. The ReLU is used to learn the non-linear relations in the fully connected layer.

Global average pooling (could you please provide me a definition of Global average pooling) could be used to regularize structures and therefore avoids overfitting when compared. In an embodiment the global average pooling could implement a Class Activation Mapping (CAM).

Global average pooling layers are used to reduce the spatial dimensions of a three-dimensional tensor. Those layers perform a more extreme type of dimensionality reduction, where a tensor with dimensions $h * w * d$ is reduced in size to have dimensions $1 * 1 * d$ and reduce each $h * w$ feature map to a single number by simply taking the average of al $hw$ values. Global average pooling - Convolutional Neural Network gives info on the object in the image and where the object is in the image without the use of an extra layer. The identification of the object is expressed as a heat map (CAM).

In an embodiment of the present subject matter the second convolutional neural network is fed with the Map design along with the multiplication $B(y_t) = B^*(y_t) \odot P(o_t|y_t)$ are fed into the network. Then, two convolutional layers of 7x7 with a stride of 3 are connected, followed by a flatten layer which is an input to a fully connected layer. In an embodiment the last five actions and the time $t$ are added. This will allow to improve the prediction. The history actions along with time $t$ are fed into an embedding layer, which contacts with the fully-connected layer's output. The generated vector is fed to a fully-connected layer to extract the second probabilities $\pi(a_t|B(y_t))$

In another embodiment, presented figure 4, an apparatus to realize localization is proposed. This apparatus comprises:

- Means 401 for determining first probabilities, associated with a set of possible positions, of having a current observation given one of the possible positions
- Means 402 for determining multiplications of the probability associated to one of the possible positions and a belief estimation associated this one of the possible positions
- Means 403 for determining second probabilities, associated to a set of possible actions and the set of possible positions, of having one of the possible actions given the multiplication associated to one of the possible positions,
- Means 404 for determining an estimation of an action
- Means 405 for of determining the position
- Means 406 for of updating the belief estimation using the determined position and a transition function, the belief estimation being associated to all the possible future position.

In an embodiment the positions (or future positions) are the positions of the apparatus and the action are the action (going left, right, backward, forward) taken by apparatus alone or via the displacement of an end-user handling this apparatus.

In an embodiment of the present subject matter the means 401 for determining the first probabilities is configured to use a fist convolutional neural network comprising at least:

- 3 convolutional layers 201, 202 and 203
- A fully connecter layer 204

and wherein an input of this first convolutional neural network being the current observation and an output of this neural network being the first probabilities.

In an embodiment of the present subject matter the means 403 for determining second probabilities is configured to use a second convolutional neural network comprising at least:

- 2 convolutional layers 301 and 302
- A fully connecter layer 303

and wherein:

- an input of the second convolutional neural network being the multiplications and
- an output of the second convolutional neural network being the second probabilities and
- an input of the second convolutional neural network being a map of an area on which the localization is realized and
- an input of the fully connected layer of the second convolutional neural network being a set of previous actions and an indication of the current time.

In an embodiment of the present subject matter the means 404 for determining an estimation of the action is configured to use:

$$\alpha_t = \underset{a_t}{\operatorname{argmax}}\, \pi(a_t | B(y_t))$$

Wherein:

- $a_t$ is the set of possible actions and
- $\alpha t$ is the estimation of the action and

- $\pi(a_t | B(y_t))$ is the set of second probabilities.

In an embodiment of the present subject matter the means 405 for determining the position is configured to use a map of an area on which the localization is realized and the estimated action.

In an embodiment of the present subject matter the means 406 for updating the belief estimation using a transition function is configured to take at each time step and it's a classic function for kinetic designs and evaluations.

In another embodiment, a second apparatus is proposed. This second apparatus comprises:

- at least one processor; and
- at least one memory including computer program code, the at least one memory and computer program code configured to, with the at least one processor, cause the apparatus:
- determining first probabilities, associated with a set of possible positions, of having a current observation given one of the possible positions
- determining multiplications of the probability associated to one of the possible positions and a belief estimation associated this one of the possible positions
- determining second probabilities, associated to a set of possible actions and the set of possible positions, of having one of the possible actions given the multiplication estimations associated to one of the possible positions,
- determining an estimation of an action
- determining the position
- updating the belief estimation using the determined position and a transition function, the belief estimation being associated to all the possible future position.

In an embodiment the positions (or future positions) are the positions of the apparatus and the action are the action (going left, right, backward, forward) taken by apparatus alone or via the displacement of an end-user handling this apparatus.

In other embodiments, these previously presented apparatus can be organized as a specific circuit, or computer or can be a functional circuit, part of a common server or any partition in between.

As used in this application, the term "circuitry" may refer to one or more or all of the following:

- hardware-only circuit implementations (such as implementations in only analog and/or digital circuitry) and
- combinations of hardware circuits and software, such as (as applicable):
- a combination of analog and/or digital hardware circuit(s) with software/firmware and
- any portions of hardware processor(s) with software (including digital signal processor(s)), software, and memory(ies) that work together to cause an apparatus, such as a mobile phone or server, to perform various functions) and

- hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all the steps of the described method. The program storage devices may be, for example, digital memories, magnetic storage media, such as magnetic disks and magnetic tapes, hard drives, or optically readable digital data storage media.

Another embodiment of the present subject matter is a computer-readable medium having embodied thereon a computer program configured to realize the method, presented figure 1, to realize localization. The method comprises the following steps:

- a step 101 of determining first probabilities, associated with a set of possible positions, of having a current observation given one of the possible positions
- a step 102 of determining multiplications of the probability associated to one of the possible positions and a belief estimation associated this one of the possible positions
- a step 103 of determining second probabilities, associated to a set of possible actions and the set of possible positions, of having one of the possible actions given the multiplication estimations associated to one of the possible positions,
- a step 104 of determining an estimation of an action
- a step 105 of determining the position
- a step 106 of updating the belief estimation using the determined position and a transition function, the belief estimation being associated to all the possible future position.

In an embodiment the positions (or future positions) are the positions of the apparatus implementing the method of the present subject matter and the action are the action (going left, right, backward, forward) taken by apparatus alone or via the displacement of an end-user handling this apparatus.

**Claims**

1. A method, to realize localization, comprising:

   - a step (101) of determining first probabilities, associated with a set of possible positions, of having a current observation given one of the possible positions
   - a step (102) of determining multiplications of the probability associated to one of the possible positions and a belief estimation associated this one of the possible positions
   - a step (103) of determining second probabilities, associated to a set of possible actions and the set of possible positions, of having one of the possible actions given the multiplication associated to one of the possible positions
   - a step (104) of determining an estimation of an action
   - a step (105) of determining the position
   - a step (106) of updating the belief estimation using the determined position and a transition function, the belief estimation being associated to all the possible future position.

2. The method according to claim 1 wherein the step (101) of determining the first probabilities is configured to use a fist convolutional neural network comprising at least:

   - 3 convolutional layers (201, 202 and 203)
   - A fully connecter layer (204)

   and wherein an input of this first convolutional neural network being the current observation and an output of this neural network being the first probabilities.

3. The method according to claim 1 or 2 wherein the step (103) of determining second probabilities is configured to use a second convolutional neural network comprising at least:

   - 2 convolutional layers (301 and 302)
   - A fully connecter layer (303)

   and wherein:

   - an input of the second convolutional neural network being the multiplications and
• an output of the second convolutional neural network being the second probabilities and
• an input of the second convolutional neural network being a map of an area on which the localization is realized and
• an input of the fully connected layer of the second convolutional neural network being a set of previous actions and an indication of the current time.

4. The method according to claim 1 or 2 or 3 wherein the step 104 of determining an estimation of the action is configured to use:

$$\alpha_t = \underset{a_t}{\mathrm{argmax}}\,\pi(a_t|B(y_t))$$

Wherein:

• $a_t$ is the set of possible actions and
• $\alpha t$ is the estimation of the action and
• $\pi(a_t|B(y_t))$ is the set of second probabilities.

5. The method according to claim 1 or 2 or 3 or 4 wherein the step 105 of determining the position is configured to use a map of an area on which the localization is realized.

6. The method according to claim 1 or 2 or 3 or 4 or 5 wherein the step (106) of updating the belief estimation using a transition function is configured to take at each time step and it's a classic function for kinetic designs and evaluations.

7. The method according to claim 1 or 2 or 3 or 4 or 5 or 6, also comprising a step of comparing the determined position with the position having the biggest associated belief estimation, optionally the method could also comprise a step of updating a training of the second convolutional neural network using the comparisons of the step of comparing.

8. Apparatus to realize localization is proposed, the apparatus comprising:

• means (401) for determining first probabilities, associated with a set of possible positions, of having a current observation given one of the possible positions
• means (402) for determining multiplications of the probability associated to one of the possible positions and a belief estimation associated this one of the possible positions
• means (403) for determining second probabilities, associated to a set of possible actions and the set of possible positions, of having one of the possible actions given the multiplications associated to one of the possible positions,
• means (404) for determining an estimation of an action
• means (405) for of determining the position
• means (406) for of updating the belief estimation using the determined position and a transition function, the belief estimation being associated to all the possible future position.

9. computer-readable medium having embodied thereon a computer program configured to realize a method to realize localization, the method comprising:

• a step (101) of determining first probabilities, associated with a set of possible positions, of having a current observation given one of the possible positions
• a step (102) of determining multiplications of the probability associated to one of the possible positions and a belief estimation associated this one of the possible positions
• a step (103) of determining second probabilities, associated to a set of possible actions and the set of possible positions, of having one of the possible actions given the multiplication associated to one of the possible positions,
• a step (104) of determining an estimation of an action
• a step (105) of determining the position
• a step (106) of updating the belief estimation using the determined position and a transition function, the belief estimation being associated to all the possible future position.

101 — Determination of first probabilities, associated of having a current observation given a possible position

102 — Multiplication of probability and belief estimation

103 — Determination of second probabilities of having one of the possible actions given the belief estimations associated to one of the possible positions

104 — Determination of an estimation of an action taken by the user

105 — Determination of the position of the user

106 — Updating the belief estimation

**Fig. 1**

201 — Convolutional layer

202 — Convolutional layer

203 — Convolutional layer

204 — Fully connecter layer

**Fig. 2**

301 — Convolutional layer

302 — Convolutional layer

302 — Fully connecter layer

**Fig. 3**

**Fig. 4**

401 — Means for determining first probabilities, associated of having a current observation given a possible position

402 — Means for multiplying the probability and belief estimations

403 — Means for determining second probabilities of having one of the possible actions given the belief estimations associated to one of the possible positions

404 — Means for determining an estimation of an action taken by the user

405 — Means for determining the position of the user

406 — Means for updating the belief estimation

Europäisches
Patentamt

European
Patent Office

Office européen
des brevets

# EUROPEAN SEARCH REPORT

Application Number

EP 19 15 0416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEVENDRA SINGH CHAPLOT ET AL: "Active Neural Localization", ARXIV.ORG, CORNELL UNIVERSITY LIBRARY, 201 OLIN LIBRARY CORNELL UNIVERSITY ITHACA, NY 14853, 24 January 2018 (2018-01-24), XP081209620, * abstract * * paragraph [0001] * | 1-9 | INV. G06N3/04 G06N3/08 |
| A,D | SAURABH GUPTA ET AL: "Cognitive Mapping and Planning for Visual Navigation", ARXIV - 1611.07004V2, vol. 1702.03920, no. v2, 23 April 2017 (2017-04-23), pages 1-14, XP055601608, ISBN: 978-1-5386-0457-1 * the whole document * | 1-9 | |
| A | LEI TAI ET AL: "A Survey of Deep Network Solutions for Learning Control in Robotics: From Reinforcement to Imitation", ARXIV.ORG, CORNELL UNIVERSITY LIBRARY, 201 OLIN LIBRARY CORNELL UNIVERSITY ITHACA, NY 14853, 21 December 2016 (2016-12-21), XP081358496, * the whole document * | 1-9 | |

TECHNICAL FIELDS SEARCHED (IPC)

G06N

-/--

The present search report has been drawn up for all claims

| Place of search | Date of completion of the search | Examiner |
|---|---|---|
| The Hague | 2 July 2019 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**EUROPEAN SEARCH REPORT**

Application Number

EP 19 15 0416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Fan Zhang ET AL: "Indoor Space Recognition using Deep Convolutional Neural Network: A Case Study at MIT Campus", arXiv (Cornell University Library), 7 October 2016 (2016-10-07), XP055374046, Retrieved from the Internet: URL:https://arxiv.org/ftp/arxiv/papers/1610/1610.02414.pdf [retrieved on 2017-05-18] * the whole document * | 1-9 | |

-----

TECHNICAL FIELDS SEARCHED (IPC)

The present search report has been drawn up for all claims

| Place of search | Date of completion of the search | Examiner |
|---|---|---|
| The Hague | 2 July 2019 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. DIEDERIK ; J. BA.** Adam: A method for stochastic optimization. *Conference for Learning Representations,* 2015

- **K. DIEDERIK ; J. BA.** Adam: A method for stochastic optimization. *3rd International Conference for Learning Representations,* 2015